# EUROPEAN PATENT APPLICATION

(11) **EP 4 786 945 A1**
(43) Date of publication of application: **05.08.2026**
(21) Application number: 26153984.5
(22) Date of filing: 26.01.2026
(51) Int. Cl.: G01M 11/08, G01M 17/02, G01N 21/88, G06T 7/00

(54) **TIRE INSPECTION DEVICE, TIRE INSPECTION SYSTEM, AND TIRE INSPECTION METHOD**

(30) Priority: 30.01.2025 JP 2025014207
(71) Applicant: NEC Corporation, 108-8001 Tokyo (JP)
(72) Inventor: INOUE, Keiko, Tokyo, 108-8001 (JP)
(74) Representative: Betten & Resch

(57) **Abstract**

A tire inspection device includes a feature extraction unit that extracts a feature including at least a surface normal of a tire from an image group imaged by a camera, a region division unit that divides the image group into a region of a tread surface and a region of a side surface of the tire, based on the feature, and an abnormality detection unit that detects an abnormality on a tire surface, based on a feature of the tread surface and a feature of the side surface.

## Description

This application is based upon and claims the benefit of priority from Japanese patent application No. 2025-014207, filed on January 30, 2025, the disclosure of which is incorporated herein in its entirety by reference.

### TECHNICAL FIELD

The present disclosure relates to a tire inspection device, a tire inspection system, a tire inspection method, and a program.

### BACKGROUND ART

Typically, a technique for inspecting a surface defect has been known. Examples of the technique for inspecting the surface defect include, for example, a surface defect evaluation device described in JP 2016-217940 A.

The surface defect evaluation device described in JP 2016-217940 A includes an input unit that receives a two-dimensional image of an appearance of an object to be inspected acquired by an image acquisition unit and a three-dimensional shape of the object measured by a shape measurement unit, as an input and an arithmetic unit that acquires information regarding a surface defect existing on a surface of the object based on reference appearance data that is original data regarding the object and is data to be a reference of determination regarding a deformation or a defect caused over time, image data that is information regarding the measured three-dimensional shape, and shape data.

### SUMMARY

In a surface defect evaluation device disclosed in JP 2016-217940 A, an arithmetic unit acquires information regarding a surface defect existing on a surface of an object based on reference outer shape data, image data that is information regarding a measured three-dimensional shape, and shape data. For example, an inspection object is a tire, complicated patterns are applied on a tread surface and a side surface of the tire, and in addition, various patterns are applied depending on a type of the tire. Therefore, even if the technique disclosed in JP 2016-217940 A is applied to the tire that is the object, there is a possibility that it is not possible to accurately perform a tire appearance inspection.

The present disclosure has been made in view of the above problems, and an exemplary object of the present disclosure is to provide a technology capable of accurately performing a tire appearance inspection.

A tire inspection device according to one exemplary aspect of the present disclosure includes control means for controlling a plurality of pieces of illumination means that performs illumination from different illumination directions and causing imaging means to image a tire surface in time with an illumination timing, while sequentially irradiating the tire with illumination from a plurality of illumination directions, feature extraction means for extracting a feature including at least a surface normal of the tire from an image group imaged by the imaging means, region division means for dividing the image group into a region of a tread surface and a region of a side surface of the tire, based on the feature, and abnormality detection means for detecting an abnormality on the tire surface, based on a feature of the tread surface and a feature of the side surface.

A tire inspection system according to one exemplary aspect of the present disclosure includes a plurality of pieces of illumination means for performing illumination from different illumination directions, imaging means for imaging a tire, control means for controlling the plurality of pieces of illumination means and causing the imaging means to image a tire surface in time with an illumination timing, while sequentially irradiating the tire with illumination from a plurality of illumination directions, feature extraction means for extracting a feature including at least a surface normal of the tire from an image group imaged by the imaging means, region division means for dividing the image group into a region of a tread surface and a region of a side surface of the tire, based on the feature, and abnormality detection means for detecting an abnormality on the tire surface, based on a feature of the tread surface and a feature of the side surface.

A tire inspection method according to one exemplary aspect of the present disclosure for causing a computer to inspect a tire, and the method includes controlling a plurality of pieces of illumination means that performs illumination from different illumination directions and causing imaging means to image a tire surface in time with an illumination timing, while sequentially irradiating the tire with illumination from a plurality of illumination directions, extracting a feature including at least a surface normal of the tire from an image group imaged by the imaging means, dividing the image group into a region of a tread surface and a region of a side surface of the tire, based on the feature, and detecting an abnormality on the tire surface, based on a feature of the tread surface and a feature of the side surface.

According to one exemplary aspect of the present disclosure, an exemplary effect is obtained that it is possible to provide a technology capable of accurately performing a tire appearance inspection.

### BRIEF DESCRIPTION OF THE DRAWINGS

Fig. 1 is a block diagram illustrating a configuration of a tire inspection device according to the present disclosure;
Fig. 2 is a diagram illustrating an example of arrangement of a camera with respect to a tire;
Fig. 3 is a diagram for explaining various types of information written on a side surface of the tire;
Fig. 4 is a diagram for explaining a tread shape pattern of the tire;
Fig. 5 is a diagram for explaining a name of each part of the tire;
Fig. 6 is a flowchart illustrating a flow of a tire inspection method according to the present disclosure;
Fig. 7 is a block diagram illustrating the configuration of the tire inspection device according to the present disclosure;
Fig. 8 is a diagram for explaining imaging timings of the cameras;
Fig. 9 is a flowchart illustrating the flow of the tire inspection method according to the present disclosure;
Fig. 10 is a block diagram illustrating the configuration of the tire inspection device according to the present disclosure;
Fig. 11 is a flowchart illustrating the flow of the tire inspection method according to the present disclosure;
Fig. 12 is a block diagram illustrating the configuration of the tire inspection system according to the present disclosure; and
Fig. 13 is a block diagram illustrating a configuration of a computer that functions as the tire inspection device according to the present disclosure.

### EXAMPLE EMBODIMENT

Hereinafter, example embodiments of the present invention will be described. However, the present invention is not limited to the following exemplary example embodiments, and various modifications can be made within a scope described in the claims. For example, example embodiments obtained by appropriately combining technologies (some or all of things or methods) adopted in the following example embodiments can also be included in the scope of the present invention. Example embodiments obtained by appropriately omitting some of the technologies adopted in the following exemplary example embodiments can also be included in the scope of the present invention. Effects mentioned in the following exemplary example embodiments are examples of effects expected in the exemplary example embodiments, and do not define extension of the present invention. That is, example embodiments that do not achieve the effects mentioned in the following exemplary example embodiments can also be included in the scope of the present invention.

### [First Exemplary Example Embodiment]

A first exemplary example embodiment that is an example of the example embodiments of the present invention will be described in detail with reference to the drawings. The present exemplary example embodiment is a basic form of each exemplary example embodiment to be described below. An application range of each technology adopted in the present exemplary example embodiment is not limited to the present exemplary example embodiment. That is, each technology adopted in the present exemplary example embodiment can also be adopted in another exemplary example embodiment included in the present disclosure within a range in which no particular technical problem occurs. Each technology illustrated in the drawings referred to for describing the present exemplary example embodiment can also be adopted in other exemplary example embodiments included in the present disclosure within a range in which no particular technical problem occurs.

### (Configuration of Tire Inspection Device)

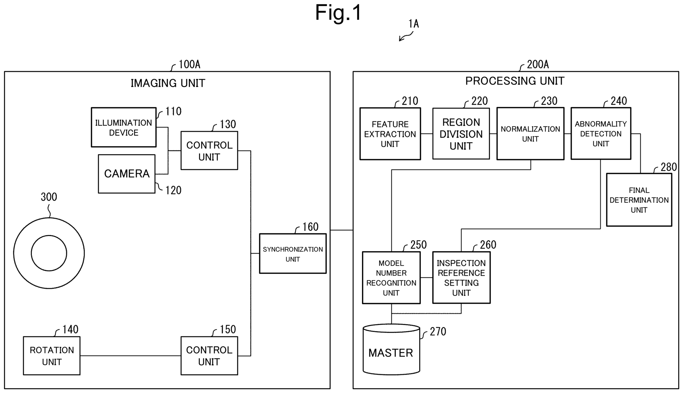

A configuration of a tire inspection device 1A will be described with reference to Fig. 1. Fig. 1 is a block diagram illustrating the configuration of the tire inspection device 1A. As illustrated in Fig. 1, the tire inspection device 1A includes an imaging unit 100A and a processing unit 200A.

The imaging unit 100A includes an illumination device 110, a camera 120, a control unit 130, a rotation unit 140, a control unit 150, and a synchronization unit 160. The processing unit 200A includes a feature extraction unit 210, a region division unit 220, a normalization unit 230, an abnormality detection unit 240, a model number recognition unit 250, an inspection reference setting unit 260, a master 270, and a final determination unit 280. In Fig. 1, although a tire 300 is described in the imaging unit 100A, the tire 300 may be an external configuration of the tire inspection device 1A.

The illumination device 110 is a configuration that achieves illumination means in the present exemplary example embodiment. The camera 120 is a configuration that achieves imaging means in the present exemplary example embodiment. The control unit 130 is a configuration that achieves control means in the present exemplary example embodiment. The rotation unit 140 is a configuration that achieves rotation means in the present exemplary example embodiment. The synchronization unit 160 is a configuration that achieves synchronization means in the present exemplary example embodiment.

The feature extraction unit 210 is a configuration that achieves feature extraction means in the present exemplary example embodiment.

The region division unit 220 is a configuration that achieves region division means in the present exemplary example embodiment. The normalization unit 230 is a configuration that achieves normalization means in the present exemplary example embodiment. The abnormality detection unit 240 is a configuration that achieves abnormality detection means in the present exemplary example embodiment. The model number recognition unit 250 is a configuration that achieves model number recognition means in the present exemplary example embodiment. The inspection reference setting unit 260 is a configuration that achieves inspection reference setting means in the present exemplary example embodiment. The final determination unit 280 is a configuration that achieves final determination means in the present exemplary example embodiment.

The illumination device 110 is a device that irradiates the tire 300 with light (illumination light) for imaging the tire 300 and includes a plurality of illumination units that performs illumination from different illumination directions. As will be described later, in order to estimate a surface normal of a tire by adopting a photometric stereo method, it is necessary for the illumination device 110 to illuminate the tire from a plurality of different illumination directions, and it is preferable to be capable of performing illumination from three or more directions.

The camera 120 is arranged obliquely above the tire 300 and is arranged to simultaneously image a tread surface and a side surface of the tire 300. The camera 120 images a surface of the tire 300 illuminated by the illumination device 110 from the plurality of illumination directions. For example, in a case where the tire 300 is illuminated by the illumination device 110 from three directions, the camera 120 images the surface of the tire 300 three times, while sequentially switching the three illumination units. A pattern for sequentially switching the three illumination units will be referred to as an illumination pattern. Three images imaged by the camera 120 are referred to as an image group.

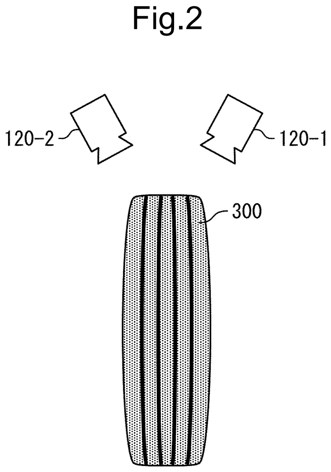

Fig. 2 is a diagram illustrating an example of arrangement of the camera 120 with respect to the tire 300. Although Fig. 2 illustrates an arrangement example of two cameras 120-1 and 120-2, any one of the cameras may be used. As illustrated in Fig. 2, the cameras 120-1 and 120-2 are arranged obliquely above the tire 300, and are arranged to simultaneously image the tread surface and the side surface of the tire 300.

The control unit 130 controls the plurality of illumination units (illumination device 110) that performs illumination from the different illumination directions, and causes the camera 120 to image the surface of the tire 300 in time with an illumination timing, while sequentially irradiating the tire 300 with illumination from the plurality of illumination directions.

The rotation unit 140 rotates the tire 300 about a central axis. The control unit 150 controls the rotation unit 140 and rotates/stops the tire 300. The synchronization unit 160 controls the control unit 130 and the control unit 150 in such a way as to synchronize an imaging timing of the camera 120 with the rotation of the rotation unit 140.

For example, the synchronization unit 160 causes the rotation unit 140 to stop the rotation of the tire 300 when the camera 120 images the surface of the tire 300, and causes the rotation unit 140 to rotate the tire 300 when the camera 120 does not image the surface of the tire 300.

The feature extraction unit 210 extracts a feature including at least a surface normal of the tire 300 from the image group imaged by the camera 120. For example, in a case where the illumination device 110 illuminates the surface of the tire 300 from the three directions, the image group includes three images captured by the camera 120 from the different illumination directions.

The feature extraction unit 210 extracts the feature including the surface normal by applying a photometric stereo method to the image group imaged by the camera 120. This feature includes information such as texture (specularity, roughness, base color), in addition to the surface normal. The feature extraction unit 210 may generate an image of which a contrast of a groove (groove in tread surface) is enhanced using the photometric stereo method. In the following description, the surface normal may be referred to as normal information or a normal vector.

The region division unit 220 divides the image group into regions of the tread surface and the side surface of the tire 300, based on the feature extracted by the feature extraction unit 210. Here, a name of each part of the tire 300 will be briefly described.

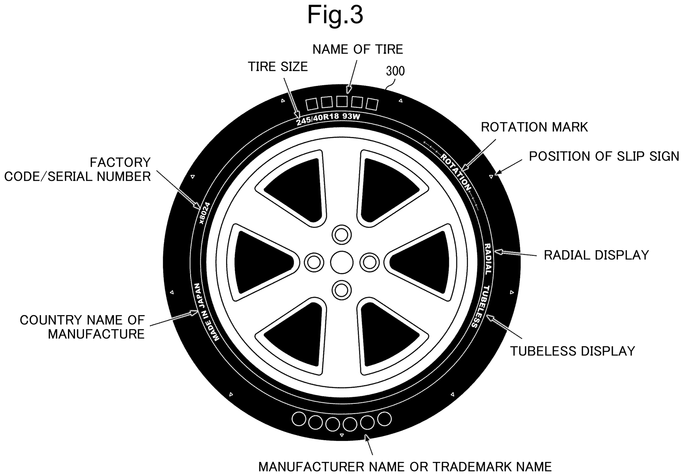

Fig. 3 is a diagram for explaining various types of information written on the side surface of the tire 300. Fig. 3 is a diagram of the tire 300 viewed from the side, and information is written such as a manufacturer name or a trademark name, a name of the tire, a tire size, a country name of manufacture, a factory code and a serial number, a position of a slip sign, radial display, tubeless display, or a rotation mark.

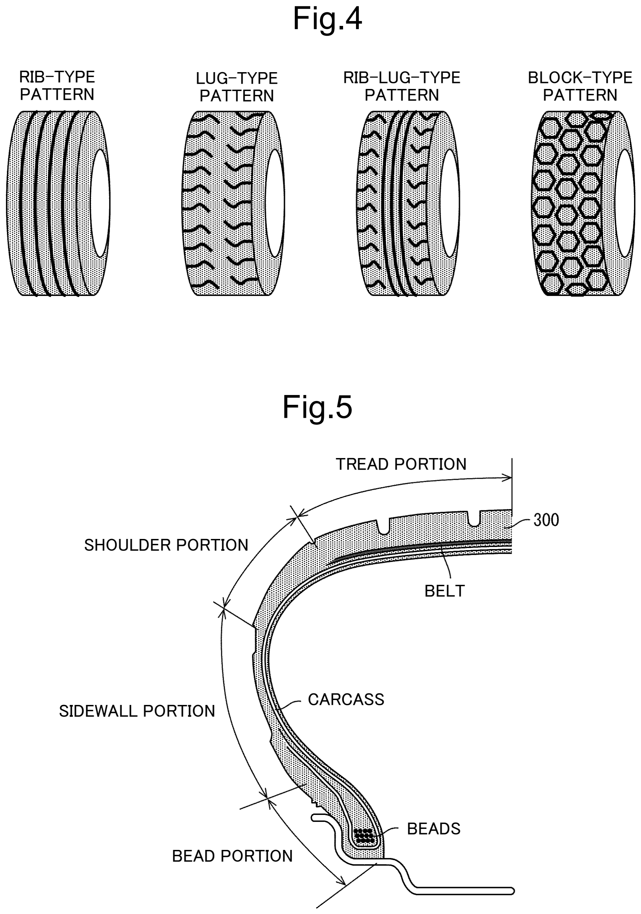

Fig. 4 is a diagram for explaining a tread shape pattern of the tire 300. As illustrated in Fig. 4, as the tread shape pattern, a rib-type pattern, a lug-type pattern, a rib-lug-type pattern, a block-type pattern, and the like exist.

Fig. 5 is a diagram for explaining a name of each part of the tire. Fig. 5 is a cross-sectional view of the tire 300, and the tire 300 includes a tread portion, a shoulder portion, a sidewall portion, a bead portion, or the like. In the present exemplary example embodiment, the region division unit 220 divides a region of the tread portion (tread surface) and a region of a side surface portion (side surface) including at least the sidewall portion.

The region division unit 220 refers to the feature extracted by the feature extraction unit 210, extracts, for example, adjacent pixels of which the normal vector changes by a predetermined angle, and in a case where the adjacent pixels continue in a band-like shape along the tire 300, and the portion may be set as the shoulder portion, and respective regions divided by the shoulder portion may be set as the region of the tread portion and the region of the side surface portion.

The normalization unit 230 normalizes a feature of the tread surface and a feature of the side surface in such a way that each of the tread surface and the side surface faces a predetermined direction. Since an orientation of the surface of the tire 300 is not always in a constant direction, this processing is processing for correcting the orientation. For example, the normalization unit 230 performs normalization by calculating an average value of the normal information in each pixel of the tread surface or normal information with the highest frequency and rotating the normal vector and performing homography transformation in such a way that the normal direction (average value of normal information, normal information with highest frequency) becomes a predetermined direction. By performing the homography transformation, for example, even in a case where the tire 300 is obliquely imaged, it is possible to perform transformation in such a way that the tire 300 looks to be viewed from the above.

The model number recognition unit 250 recognizes a model number of the tire 300, based on the image imaged by the camera 120. Specifically, the model number recognition unit 250 performs optical character recognition (OCR) on a single image among the image group or a high-contrast image synthesized from the image group, extracts character information from the image of the side surface of the tire 300, and reads tire information including the model number of the tire 300.

The tire information is information regarding the tire 300 described with reference to Fig. 2. As the image on which optical character recognition is performed, an original image may be used, and an image obtained by performing homography transformation by normalization may be used.

The master 270 stores the tire information in advance. In particular, the master 270 stores the tire information in which the model number of the tire 300 and a reference dimension of the tire 300 are associated. The reference dimension here is a dimension defined as a specification.

The inspection reference setting unit 260 sets an inspection reference by the abnormality detection unit 240, based on the model number of the tire 300. Specifically, the inspection reference setting unit 260 acquires information regarding the reference dimension associated with the model number of the tire 300, from the master 270.

The abnormality detection unit 240 detects an abnormality on the surface of the tire 300, based on the feature of the tread surface and the feature of the side surface. For example, the abnormality detection unit 240 detects an abnormality such as a cut in a region or a cord exposure, using at least one of a normal or an intermediate feature at the time of normal estimation.

Specifically, the abnormality detection unit 240 recognizes the shape of the tire 300 using the image imaged by the camera 120. Then, the abnormality detection unit 240 calculates an absolute dimension of the tire 300, based on the recognized shape of the tire 300 and the reference dimension of the tire 300 acquired by the inspection reference setting unit 260. In particular, the abnormality detection unit 240 calculates a dimension of a defect candidate of the tire 300 (absolute dimension of defect candidate of tire 300). Here, the absolute dimension is an actual dimension (real dimension) of the tire 300.

The abnormality detection unit 240 may generate the image of which the contrast of the groove (groove in tread surface) is enhanced using the photometric stereo method. Then, the abnormality detection unit 240 may calculate how many pixels the groove corresponds to, and calculate how many millimeters one pixel corresponds to, based on information about a dimension of the groove indicated by the reference dimension. The abnormality detection unit 240 can convert the number of pixels in the image of the tire 300 into the absolute dimension of the tire 300 based on the calculated length per pixel.

The abnormality detection unit 240 determines presence or absence of the defect of the tire 300, based on the reference dimension of the tire 300 set by the inspection reference setting unit 260, the recognized shape of the tire 300, and the calculated dimension of the tire 300.

For example, in a case of detecting a defect candidate such as a crack in the recognized shape of the tire 300, the abnormality detection unit 240 calculates an absolute dimension of the defect candidate. Then, the abnormality detection unit 240 compares the absolute dimension of the defect candidate with a threshold set for each defect type. In a case where the absolute dimension of the defect candidate is equal to or more than the threshold value, the abnormality detection unit 240 determines that the defect candidate corresponds to the defect.

In a case where an error between the calculated absolute dimension of the tire 300 and the reference dimension of the tire 300 set by the inspection reference setting unit 260 is equal to or more than a predetermined threshold, the abnormality detection unit 240 determines that the tire 300 has a defect.

The type of the defect detected by the abnormality detection unit 240 is not limited to a specific type. For example, the abnormality detection unit 240 may detect tread wear (shortage of depth of groove due to wear of tread portion), a cut flaw (cut), a crack (cracking), a through flaw (nail hole or the like), waving, curling, exposure of an internal cord (metal cord or nylon cord inside the tire), and a puncture repair mark, or part thereof, but is not limited thereto.

It is assumed that the master 270 store the reference dimension of the tire 300 and the reference dimension of the side surface and store a threshold for abnormality determination of the tread surface and a threshold for abnormality determination of the side surface. The abnormality detection unit 240 separately performs the abnormality determination on the tread surface and the abnormality determination on the side surface, using the threshold for the abnormality determination of the tread surface and the threshold for the abnormality determination of the side surface.

The final determination unit 280 determines an abnormality of an entire circumference of the tire 300, based on a detection result of the abnormality detection unit 240. Specifically, while the synchronization unit 160 synchronizes the imaging timing of the camera 120 with the rotation of the rotation unit 140, the image imaged by the camera 120 is sequentially input into the feature extraction unit 210. Then, the feature extraction unit 210, the region division unit 220, the normalization unit 230, and the abnormality detection unit 240 detect the abnormalities on the tread surface and the side surface of the tire 300, by executing the above processing. When the inspection on the entire circumference is completed, the final determination unit 280 integrates the detection results of the abnormality detection unit 240 and makes final determination. For example, if there is only one portion where an abnormality is detected, the final determination unit 280 may determine that the tire 300 is defective, or if there are a predetermined number or more portions where the abnormality is detected, the final determination unit 280 may determine that the tire 300 is defective.

### (Effects of Tire Inspection Device)

As described above, in a tire inspection device 1A, the abnormality detection unit 240 detects the abnormality on the surface of the tire 300, based on the feature of the tread surface and the feature of the side surface of the tire 300. Therefore, it is possible to separately set the inspection reference of the tread surface and the inspection reference of the side surface, and it is possible to accurately perform a tire appearance inspection.

The normalization unit 230 normalizes the feature of the tread surface and the feature of the side surface in such a way that each of the tread surface and the side surface faces the predetermined direction. Therefore, even in a case where the orientation of the surface of the tire 300 is not in the constant direction, it is possible to correct the feature of the surface of the tire 300 as if the tire 300 is imaged from the constant direction.

The feature extraction unit 210 extracts the feature including the surface normal by applying the photometric stereo method to the image group imaged by the camera 120. Therefore, the abnormality detection unit 240 can easily perform the appearance inspection of the tire 300.

The rotation unit 140 rotates the tire 300 about the central axis, and the synchronization unit 160 synchronizes the imaging timing of the camera 120 with the rotation of the rotation unit 140. Therefore, the final determination unit 280 can determine the abnormality of the entire circumference of the tire 300, based on the detection result of the abnormality detection unit 240.

The synchronization unit 160 causes the rotation unit 140 to stop the rotation of the tire 300 when the camera 120 images the surface of the tire 300, and causes the rotation unit 140 to rotate the tire 300 when the camera 120 does not image the surface of the tire 300. Therefore, the feature extraction unit 210 can apply the photometric stereo method to the image group imaged by the camera 120.

The inspection reference setting unit 260 sets the inspection reference by the abnormality detection unit 240, based on the model number of the tire 300. Therefore, the inspection reference setting unit 260 can set an appropriate inspection reference, according to the type of the tire 300.

### (Flow of Tire Inspection Method)

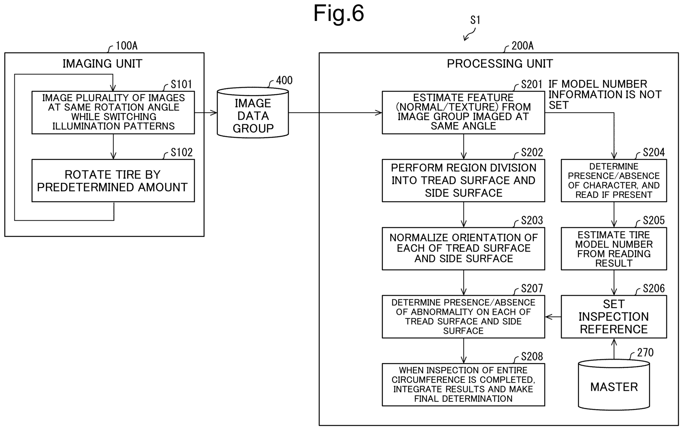

A flow of a tire inspection method S1 will be described with reference to Fig. 6. Fig. 6 is a flowchart illustrating the flow of the tire inspection method S1. As illustrated in Fig. 6, the tire inspection method S1 includes steps S101 and S102 and steps S201 to S208.

First, the imaging unit 100A images a plurality of images of the surface of the tire 300 in a state where a rotation angle of the tire 300 is the same, while switching the illumination patterns (S101). As described above, in a case where the tire 300 is illuminated by the illumination device 110 from the three directions, the camera 120 images the surface of the tire 300 three times, while sequentially switching the three illumination units. An image data group 400 imaged by the camera 120 is input into the feature extraction unit 210.

Next, the rotation unit 140 rotates the tire 300 about the central axis by a predetermined amount (S102). As described above, the synchronization unit 160 controls the control unit 130 and the control unit 150 in such a way as to synchronize the imaging timing of the camera 120 with the rotation of the rotation unit 140.

Next, the feature extraction unit 210 estimates the feature (normal information/texture) from the image group imaged by the camera 120 at the same rotation angle of the tire (S201). The feature extraction unit 210 may generate the image of which the contrast of the groove (groove in tread surface) is enhanced using the photometric stereo method.

Next, in a case where the model number of the tire 300 is set by a user, the region division unit 220 divides the image group into regions of the tread surface and the side surface of the tire 300, based on the feature extracted by the feature extraction unit 210. In a case where the model number of the tire 300 is not set by the user, the processing in steps S204 to S206 is executed in parallel.

Next, the normalization unit 230 normalizes the feature of the tread surface and the feature of the side surface in such a way that each of the tread surface and the side surface faces the predetermined direction (S203), and the processing proceeds to step S207. Since the orientation of the surface of the tire 300 is not always in the constant direction, this processing is processing for correcting the orientation.

In a case where the model number of the tire 300 is not set by the user, if characters are written on the tire 300, the model number recognition unit 250 reads the image imaged by the camera 120 (S204) and estimates the model number of the tire 300, based on the image (S205).

Next, the inspection reference setting unit 260 sets the inspection reference by the abnormality detection unit 240, based on the model number of the tire 300 (S206), and the processing proceeds to step S207. Specifically, the inspection reference setting unit 260 acquires the information regarding the reference dimension associated with the model number of the tire 300, from the master 270.

In step S207, in a case where the model number of the tire 300 is set by the user, an inspection reference related to the model number is acquired from the master 270. In a case where the model number of the tire 300 is not set by the user, the inspection reference set by the inspection reference setting unit 260 is acquired. Then, the abnormality detection unit 240 detects the abnormality on the surface of the tire 300, based on the feature of the tread surface and the feature of the side surface.

When the inspection on the entire circumference is completed, the final determination unit 280 integrates the detection results and makes final determination (S208). For example, if there is only one portion where an abnormality is detected, the final determination unit 280 may determine that the tire 300 is defective, or if there are a predetermined number or more portions where the abnormality is detected, the final determination unit 280 may determine that the tire 300 is defective.

### (Effects of Tire Inspection Method)

As described above, in the tire inspection method S1, the abnormality detection unit 240 detects the abnormality on the surface of the tire 300, based on the feature of the tread surface and the feature of the side surface of the tire 300. Therefore, it is possible to separately set the inspection reference of the tread surface and the inspection reference of the side surface, and it is possible to accurately perform the tire appearance inspection.

### [Second Exemplary Example Embodiment]

A second exemplary example embodiment that is an example of the example embodiments of the present invention will be described in detail with reference to the drawings. Components having the same functions as the components described in the above-described exemplary example embodiment are denoted by the same reference signs, and the description thereof will be appropriately omitted. An application range of each technology adopted in the present exemplary example embodiment is not limited to the present exemplary example embodiment. That is, each technology adopted in the present exemplary example embodiment can also be adopted in another exemplary example embodiment included in the present disclosure within a range in which no particular technical problem occurs. Each technology illustrated in each of the drawings referred to for describing the present exemplary example embodiment can also be adopted in another exemplary example embodiment included in the present disclosure within a range in which no particular technical problem occurs.

### (Configuration of Tire Inspection Device)

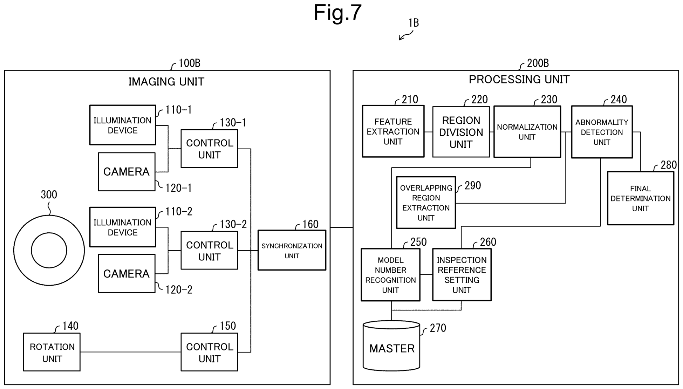

A configuration of a tire inspection device 1B will be described with reference to Fig. 7. Fig. 7 is a block diagram illustrating the configuration of the tire inspection device 1B. As illustrated in Fig. 7, the tire inspection device 1B includes an imaging unit 100B and a processing unit 200B.

The imaging unit 100B includes illumination devices 110-1 and 110-2, cameras 120-1 and 120-2, control units 130-1 and 130-2, a rotation unit 140, a control unit 150, and a synchronization unit 160.

The processing unit 200B includes a feature extraction unit 210, a region division unit 220, a normalization unit 230, an abnormality detection unit 240, a model number recognition unit 250, an inspection reference setting unit 260, a master 270, a final determination unit 280, and an overlapping region extraction unit 290. In Fig. 7, although a tire 300 is described in the imaging unit 100B, the tire 300 may be an external configuration of the tire inspection device 1B. The overlapping region extraction unit 290 is a configuration that achieves overlapping region extraction means in the present exemplary example embodiment.

The illumination device 110-1 is a device that is associated with the camera 120-1, irradiates the tire 300 with light (illumination light) for imaging the tire 300, and includes a plurality of illumination units that performs illumination from different illumination directions.

The illumination device 110-2 is a device that is associated with the camera 120-2 and irradiates the tire 300 with light (illumination light) for imaging the tire 300 and includes a plurality of illumination units that performs illumination from different illumination directions.

The camera 120-1 is arranged obliquely above the tire 300 and is arranged to simultaneously image a tread surface and a side surface of the tire 300. The camera 120-2 is arranged obliquely above the tire 300 and on an opposite side of the camera 120-1 and is arranged to simultaneously image a tread surface and a side surface of an opposite side of the tire 300.

The control unit 130-1 controls the plurality of illumination units (illumination device 110-1) that performs illumination from the different illumination directions, and causes the camera 120-1 to image the surface of the tire 300 in time with an illumination timing, while sequentially irradiating the tire 300 with illumination from the plurality of illumination directions.

The control unit 130-2 controls the plurality of illumination units (illumination device 110-2) that performs illumination from the different illumination directions, and causes the camera 120-2 to image the surface of the tire 300 in time with an illumination timing, while sequentially irradiating the tire 300 with illumination from the plurality of illumination directions.

The rotation unit 140 rotates the tire 300 about a central axis. The control unit 150 controls the rotation unit 140 and rotates/stops the tire 300. The synchronization unit 160 controls the control units 130-1, 130-2, and 150 in such a way as to synchronize imaging timings of the cameras 120-1 and 120-2 and the rotation of the rotation unit 140.

The synchronization unit 160 causes the rotation unit 140 to stop the rotation of the tire 300 when the cameras 120-1 and 120-2 image the surface of the tire 300, and causes the rotation unit 140 to rotate the tire 300 when the cameras 120-1 and 120-2 do not image the surface of the tire 300. The synchronization unit 160 may cause the rotation unit 140 to rotate the tire 300 at a constant speed regardless of the imaging of the surface of the tire 300 by the cameras 120-1 and 120-2.

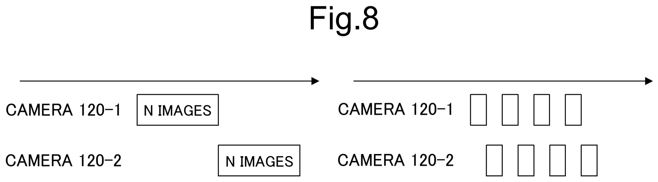

Fig. 8 is a diagram for explaining the imaging timings of the cameras 120-1 and 120-2. A left diagram in Fig. 8 illustrates that, after the camera 120-1 continuously acquires N images, the camera 120-2 continuously acquires N images, and this processing is repeated. In this case, since the images are acquired at a high frame rate, alignment between frames is easy. However, since rotation angles of the cameras 120-1 and 120-2 do not match, difficulty in alignment between camera images is high.

A right diagram in Fig. 8 illustrates that, after the camera 120-1 acquires a single image, the camera 120-2 acquires a single image, and this processing is repeated. In a case where the tire 300 moves, since the frame rate decreases, the difficulty in the alignment between the frames is high. However, since the rotation angles of the cameras 120-1 and 120-2 match, the alignment between the camera images is easy.

The feature extraction unit 210 extracts a feature including at least a surface normal of the tire 300 from an image group imaged by the camera 120-1. Similarly, the feature extraction unit 210 extracts the feature including at least the surface normal of the tire 300 from an image group imaged by the camera 120-2.

The region division unit 220 divides the image group into regions of the tread surface and the side surface of the tire 300, based on the feature extracted from the image group imaged by the camera 120-1. Similarly, the region division unit 220 divides the image group into regions of the tread surface and the side surface of the tire 300, based on the feature extracted from the image group imaged by the camera 120-2.

The normalization unit 230 normalizes a feature of the tread surface and a feature of the side surface extracted from the image group imaged by the camera 120-1, in such a way that each of the tread surface and the side surface faces a predetermined direction. Similarly, the normalization unit 230 normalizes a feature of the tread surface and a feature of the side surface extracted from the image group imaged by the camera 120-2, in such a way that each of the tread surface and the side surface faces a predetermined direction.

The control units 130-1 and 130-2 cause the plurality of cameras 120-1 and 120-2 to image the surface of the tire 300 in time with the illumination timing, while sequentially irradiating the tire 300 with illumination from the plurality of illumination directions.

The overlapping region extraction unit 290 extracts an overlapping region in the image groups imaged by the plurality of cameras 120-1 and 120-2. For example, the overlapping region extraction unit 290 may obtain image correspondence between images using a method such as feature point matching.

The abnormality detection unit 240 detects an abnormality on the surface of the tire 300, based on the feature in the overlapping region.

In a case where the synchronization unit 160 causes the rotation unit 140 to rotate the tire 300 regardless of the imaging of the surface of the tire 300 by the cameras 120-1 and 120-2, the overlapping region extraction unit 290 extracts the overlapping region in the image group, in which the rotation angle of the tire 300 is different, imaged by one of the camera 120-1 or 120-2. In this case, the overlapping region extraction unit 290 may extract the overlapping region using rotation angle information of the tire 300 at the time of image imaging.

The abnormality detection unit 240 detects an abnormality on the surface of the tire 300, based on the feature in the overlapping region.

The abnormality detection unit 240 may determine presence/absence of an abnormality after integrating feature extraction results in the overlapping region of the respective images or may integrate (OR) results of determining presence/absence in each overlapping region. The abnormality detection unit 240 may select a result based on some reliability index for the overlapping region or may calculate an average or a median after projecting a plurality of pieces of normal information on the same coordinate system.

### (Effects of Tire Inspection Device 1B)

As described above, in the tire inspection device 1B, the overlapping region extraction unit 290 extracts the overlapping region in the image groups imaged by the plurality of cameras 120-1 and 120-2.

Then, the abnormality detection unit 240 detects an abnormality on the surface of the tire 300, based on the feature in the overlapping region. Therefore, the feature in the overlapping region can be represented in more detail, and a tire appearance inspection can be more accurately performed.

The overlapping region extraction unit 290 extracts the overlapping region in the image group in which the rotation angle of the tire 300 is different, imaged by one of the cameras 120-1 or 120-2. Then, the abnormality detection unit 240 detects the abnormality on the surface of the tire 300, based on the feature in the overlapping region. Therefore, the feature in the overlapping region can be represented in more detail, and the tire appearance inspection can be performed more accurately.

### (Flow of Tire Inspection Method)

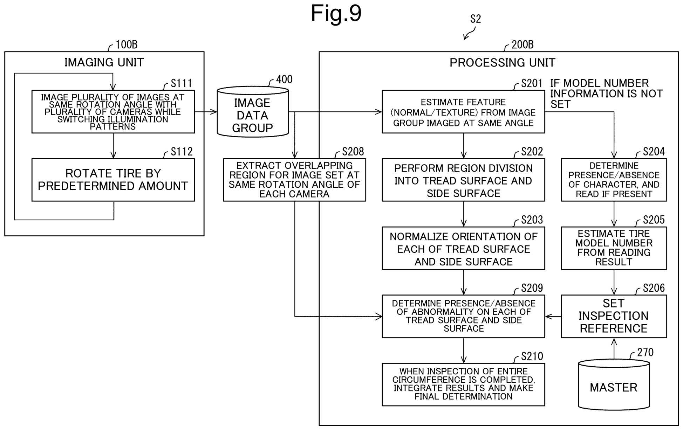

A flow of a tire inspection method S2 will be described with reference to Fig. 9. Fig. 9 is a flowchart illustrating the flow of the tire inspection method S2. As illustrated in Fig. 9, the tire inspection method S2 includes steps S111 and S112 and steps S201 to S210.

First, the imaging unit 100A images a plurality of images of the surface of the tire 300 in a state where a rotation angle of the tire 300 is the same using the plurality of cameras 120-1 and 120-2, while switching the illumination patterns (S111). As described above, in a case where the tire 300 is illuminated by the illumination devices 110-1 and 110-2 from three directions, each of the cameras 120-1 and 120-2 images the surface of the tire 300 three times, while sequentially switching three illumination units. An image data group 400 imaged by the cameras 120-1 and 120-2 is input into the feature extraction unit 210.

Next, the rotation unit 140 rotates the tire 300 about the central axis by a predetermined amount (S112). As described above, the synchronization unit 160 controls the control units 130-1, 130-2, and 150 in such a way as to synchronize the imaging timings of the cameras 120-1 and 120-2 with the rotation of the rotation unit 140.

Next, the feature extraction unit 210 estimates the feature (normal information/texture) from the image group imaged by the cameras 120-1 and 120-2 at the same rotation angle of the tire (S201). The feature extraction unit 210 may generate an image of which a contrast of a groove (groove in tread surface) is enhanced using a photometric stereo method.

Next, in a case where a model number of the tire 300 is set by a user, the region division unit 220 divides the image group into the regions of the tread surface and the side surface of the tire 300, based on the feature extracted by the feature extraction unit 210. In a case where the model number of the tire 300 is not set by the user, the processing in steps S204 to S206 is executed in parallel.

Next, the normalization unit 230 normalizes the feature of the tread surface and the feature of the side surface in such a way that each of the tread surface and the side surface faces the predetermined direction (S203), and the processing proceeds to step S207. Since the orientation of the surface of the tire 300 is not always in the constant direction, this processing is processing for correcting the orientation.

In a case where the model number of the tire 300 is not set by the user, if characters are written on the tire 300, the model number recognition unit 250 reads the image imaged by the camera 120 (S204) and estimates the model number of the tire 300, based on the image (S205).

Next, the inspection reference setting unit 260 sets an inspection reference by the abnormality detection unit 240, based on the model number of the tire 300 (S206), and the processing proceeds to step S209. Specifically, the inspection reference setting unit 260 acquires information regarding a reference dimension associated with the model number of the tire 300, from the master 270.

The overlapping region extraction unit 290 extracts the overlapping region in the image groups imaged by the plurality of cameras 120-1 and 120-2 (S208), and the processing proceeds to steps S209. For example, the overlapping region extraction unit 290 may obtain the image correspondence between the images using the method such as the feature point matching.

In step S209, in a case where the model number of the tire 300 is set by the user, the inspection reference related to the model number is acquired from the master 270. In a case where the model number of the tire 300 is not set by the user, the inspection reference set by the inspection reference setting unit 260 is acquired. Then, the abnormality detection unit 240 detects the abnormality on the surface of the tire 300, based on the feature of the tread surface and the feature of the side surface in the overlapping region.

When an inspection on an entire circumference is completed, the final determination unit 280 integrates detection results and makes final determination (S210). For example, if there is only one portion where an abnormality is detected, the final determination unit 280 may determine that the tire 300 is defective, or if there are a predetermined number or more portions where the abnormality is detected, the final determination unit 280 may determine that the tire 300 is defective.

### (Effects of Tire Inspection Method)

As described above, in the tire inspection method S2, the overlapping region extraction unit 290 extracts the overlapping region in the image groups imaged by the plurality of cameras 120-1 and 120-2.

Then, the abnormality detection unit 240 detects the abnormality on the surface of the tire 300, based on the feature in the overlapping region. Therefore, the feature in the overlapping region can be represented in more detail, and the tire appearance inspection can be performed more accurately.

### [Third Exemplary Example Embodiment]

A third exemplary example embodiment that is an example of the example embodiments of the present invention will be described in detail with reference to the drawings. Components having the same functions as the components described in the above-described exemplary example embodiment are denoted by the same reference signs, and the description thereof will be appropriately omitted. An application range of each technology adopted in the present exemplary example embodiment is not limited to the present exemplary example embodiment. That is, each technology adopted in the present exemplary example embodiment can also be adopted in another exemplary example embodiment included in the present disclosure within a range in which no particular technical problem occurs. Each technology illustrated in each of the drawings referred to for describing the present exemplary example embodiment can also be adopted in another exemplary example embodiment included in the present disclosure within a range in which no particular technical problem occurs.

### (Configuration of Tire Inspection Device)

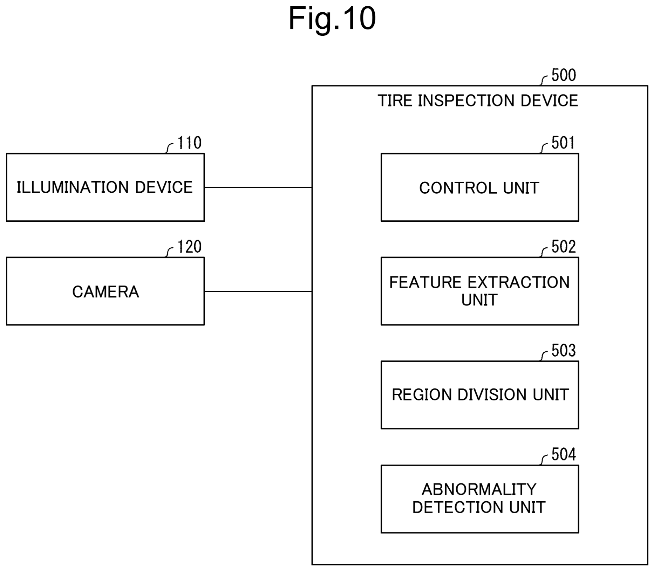

A configuration of a tire inspection device 500 will be described with reference to Fig. 10. Fig. 10 is a block diagram illustrating the configuration of the tire inspection device 500. As illustrated in Fig. 10, the tire inspection device 500 includes a control unit 501, a feature extraction unit 502, a region division unit 503, and an abnormality detection unit 504.

The control unit 501 controls an illumination device 110 including a plurality of illumination units that performs illumination from different illumination directions, and causes a camera 120 to image a surface of a tire 300 in time with an illumination timing, while sequentially irradiating the tire 300 with illumination from the plurality of illumination directions.

The feature extraction unit 502 extracts a feature including at least a surface normal of the tire 300 from an image group imaged by the camera 120. For example, in a case where the illumination device 110 illuminates the surface of the tire 300 from three directions, the image group includes three images captured by the camera 120 from the different illumination directions.

The region division unit 503 divides the image group into regions of a tread surface and a side surface of the tire 300, based on the feature extracted by the feature extraction unit 502.

The abnormality detection unit 504 detects an abnormality on the surface of the tire 300, based on a feature of the tread surface and a feature of the side surface. For example, the abnormality detection unit 504 detects the abnormality such as a cut in a region or a cord exposure, using at least one of a normal or an intermediate feature at the time of normal estimation.

### (Effects of Tire Inspection Device)

As described above, in the tire inspection device 500, the abnormality detection unit 504 detects the abnormality on the surface of the tire 300, based on the feature of the tread surface and the feature of the side surface of the tire 300.

Therefore, it is possible to separately set an inspection reference of the tread surface and an inspection reference of the side surface, and it is possible to accurately perform a tire appearance inspection.

### (Flow of Tire Inspection Method)

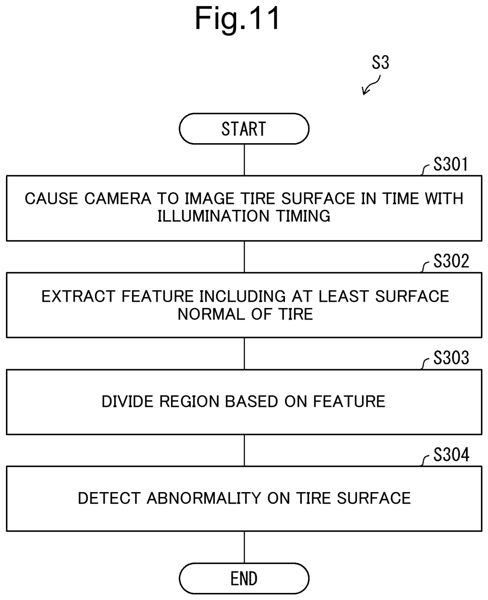

A flow of a tire inspection method S3 will be described with reference to Fig. 11. Fig. 11 is a flowchart illustrating the flow of the tire inspection method S3. As illustrated in Fig. 11, the tire inspection method S3 includes steps S301 to S304.

First, the control unit 501 controls the illumination device 110 including the plurality of illumination units that performs illumination from the different illumination directions, and causes the camera 120 to image the surface of the tire 300 in time with the illumination timing, while sequentially irradiating the tire 300 with illumination from the plurality of illumination directions (S301).

Next, the feature extraction unit 502 extracts the feature including at least the surface normal of the tire 300 from the image group imaged by the camera 120 (S302). For example, in a case where the illumination device 110 illuminates the surface of the tire 300 from three directions, the image group includes three images captured by the camera 120 from the different illumination directions.

Next, the region division unit 503 divides the image group into the regions of the tread surface and the side surface of the tire 300, based on the feature extracted by the feature extraction unit 502 (S303).

Finally, the abnormality detection unit 504 detects the abnormality on the surface of the tire 300, based on the feature of the tread surface and the feature of the side surface (S304). For example, the abnormality detection unit 504 detects the abnormality such as the cut in the region or the cord exposure, using at least one of the normal or the intermediate feature at the time of normal estimation.

### (Effects of Tire Inspection Method)

As described above, in the tire inspection method S3, the abnormality detection unit 504 detects the abnormality on the surface of the tire 300, based on the feature of the tread surface and the feature of the side surface of the tire 300. Therefore, it is possible to separately set an inspection reference of the tread surface and an inspection reference of the side surface, and it is possible to accurately perform a tire appearance inspection.

### (Configuration of Tire Inspection System)

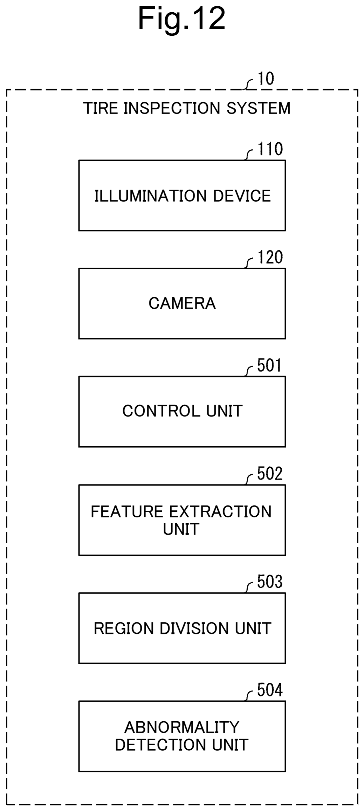

A configuration of a tire inspection system 10 will be described with reference to Fig. 12. Fig. 12 is a block diagram illustrating the configuration of the tire inspection system 10. As illustrated in Fig. 12, the tire inspection system 10 includes the illumination device 110, the camera 120, the control unit 501, the feature extraction unit 502, the region division unit 503, and the abnormality detection unit 504.

Each function of the tire inspection system 10 may be implemented on a cloud. For example, the illumination device 110, the camera 120, and the control unit 501 may be a single device, and the feature extraction unit 502, the region division unit 503, and the abnormality detection unit 504 may be a single device. These may be implemented in a single device or may be implemented in separate devices. For example, in a case where these are implemented in the separate devices, information of each unit is transmitted/received via a network, and the processing proceeds.

The illumination device 110 includes the plurality of illumination units that performs illumination from the different illumination directions. The camera 120 images the tire 300.

The control unit 501 controls the illumination device 110 including the plurality of illumination units that performs illumination from the different illumination directions, and causes the camera to image the surface of the tire 300 in time with the illumination timing, while sequentially irradiating the tire 300 with illumination from the plurality of illumination directions.

The feature extraction unit 502 extracts the feature including at least the surface normal of the tire 300 from the image group imaged by the camera 120. For example, in a case where the illumination device 110 illuminates the surface of the tire 300 from three directions, the image group includes three images captured by the camera 120 from the different illumination directions.

The region division unit 503 divides the image group into the regions of the tread surface and the side surface of the tire 300, based on the feature extracted by the feature extraction unit 502.

The abnormality detection unit 504 detects the abnormality on the surface of the tire 300, based on the feature of the tread surface and the feature of the side surface. For example, the abnormality detection unit 504 detects the abnormality such as the cut in the region or the cord exposure, using at least one of the normal or the intermediate feature at the time of normal estimation.

### (Effects of Tire Inspection System)

As described above, in the tire inspection system 10, the abnormality detection unit 504 detects the abnormality on the surface of the tire 300, based on the feature of the tread surface and the feature of the side surface of the tire 300. Therefore, it is possible to separately set an inspection reference of the tread surface and an inspection reference of the side surface, and it is possible to accurately perform a tire appearance inspection.

### [Implementation Example by Software]

Some or all of the functions of the tire inspection devices 1A, 1B, and 500 (hereinafter also referred to as "each of the above devices") may be achieved by hardware such as an Integrated Circuit (IC chip) or may be achieved by software.

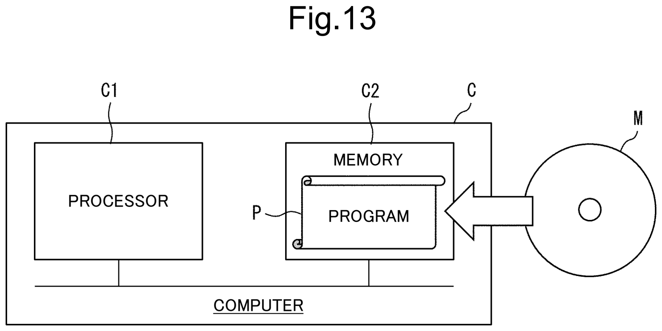

In the latter case, each of the above devices is implemented by, for example, a computer that executes commands of a program, that is software for implementing each function. An example of such a computer (hereinafter described as computer C) is illustrated in Fig. 13. Fig. 13 is a block diagram illustrating a hardware configuration of the computer C that functions as each of the above devices.

The computer C includes at least one processor C1 and at least one memory C2. A program P for causing the computer C to operate as each of the above devices is recorded in the memory C2. In the computer C, by the processor C1 reading the program P from the memory C2 and executing the program P, each function of each of the above devices is achieved.

Available examples of the processor C1 include a Central Processing Unit (CPU), a Graphic Processing Unit (GPU), a Digital Signal Processor (DSP), a Micro Processing Unit (MPU), a Floating point number Processing Unit (FPU), a Physics Processing Unit (PPU), a Tensor Processing Unit (TPU), a quantum processor, a microcontroller, or a combination thereof. Available examples of the memory C2 include a flash memory, a Hard Disk Drive (HDD), a Solid State Drive (SSD), or a combination thereof.

The computer C may further include a Random Access Memory (RAM) for expanding the program P at the time of execution and temporarily storing various types of data. The computer C may further include a communication interface for transmitting and receiving data to and from another device. The computer C may further include an input/output interface for connecting input/output equipment such as a keyboard, a mouse, a display, or a printer.

The program P can be recorded on a non-transitory tangible recording medium M readable by the computer C. As such a recording medium M, for example, a tape, a disk, a card, a semiconductor memory, a programmable logic circuit, or the like can be used.

The computer C can acquire the program P via such a recording medium M. The program P can be transmitted via a transmission medium. As such a transmission medium, for example, a communication network, a broadcast wave, or the like can be used. The computer C can also acquire the program P via such a transmission medium.

Each of the above functions of each of the above devices may be achieved by a single processor provided in a single computer, may be achieved in cooperation with a plurality of processors provided in a single computer, or may be achieved in cooperation with a plurality of processors respectively provided in a plurality of computers. The program for causing each of the above devices to achieve each of the above functions may be stored in a single memory provided in a single computer, may be stored in a distributed manner in a plurality of memories provided in a single computer, or may be stored in a distributed manner in a plurality of memories respectively provided in a plurality of computers.

### [Supplementary Matter 1]

The present disclosure includes the technologies described in the following Supplementary Notes. However, the present invention is not limited to the technologies described in the following Supplementary Notes, and various modifications can be made within the scope described in the claims.

### (Supplementary Note 1)

A tire inspection device including:
control means for controlling a plurality of pieces of illumination means that performs illumination from different illumination directions and causing imaging means to image a tire surface in time with an illumination timing, while sequentially irradiating the tire with illumination from a plurality of illumination directions;
feature extraction means for extracting a feature including at least a surface normal of the tire from an image group imaged by the imaging means;
region division means for dividing the image group into a region of a tread surface and a region of a side surface of the tire, based on the feature; and
abnormality detection means for detecting an abnormality on the tire surface, based on a feature of the tread surface and a feature of the side surface.

### (Supplementary Note 2)

The tire inspection device according to supplementary note 1, further including:
normalization means for normalizing the feature of the tread surface and the feature of the side surface, in such a way that each of the tread surface and the side surface faces a predetermined direction, in which
the abnormality detection means detects the abnormality on the tire surface, based on the normalized feature of the tread surface and the normalized feature of the side surface.

### (Supplementary Note 3)

The tire inspection device according to supplementary note 1 or 2, in which the feature extraction means extracts the feature including the surface normal by applying a photometric stereo method to the image group imaged by the imaging means.

### (Supplementary Note 4)

The tire inspection device according to any one of supplementary notes 1 to 3, further including:
rotation means for rotating the tire about a central axis;
synchronization means for synchronizing an imaging timing of the imaging means with rotation of the rotation means; and
final determination means for determining an abnormality in an entire circumference of the tire, based on a detection result of the abnormality detection means.

### (Supplementary Note 5)

The tire inspection device according to supplementary note 4, in which
the synchronization means
causes the rotation means to stop the rotation of the tire when the imaging means images the tire surface, and
causes the rotation means to rotate the tire when the imaging means does not image the tire surface.

### (Supplementary Note 6)

The tire inspection device according to supplementary note 4, in which
the synchronization means causes the rotation means to rotate the tire regardless of imaging of the tire surface by the imaging means,
the tire inspection device further including:
   overlapping region extraction means for extracting an overlapping region in an image group in which rotation angles of the tire imaged by the imaging means are different, and
   the abnormality detection means detects the abnormality on the tire surface, based on a feature in the overlapping region.

### (Supplementary Note 7)

The tire inspection device according to any one of supplementary notes 1 to 6, further including:
model number recognition means for recognizing a model number of the tire, based on an image imaged by the imaging means; and
inspection reference setting means for setting an inspection reference by the abnormality detection means, based on the model number of the tire.

### (Supplementary Note 8)

The tire inspection device according to supplementary note 1 or 2, in which
the control means causes a plurality of pieces of the imaging means to image the tire surface in time with the illumination timing, while sequentially irradiating the tire with illumination from the plurality of illumination directions,
the tire inspection device further including:
   overlapping region extraction means for extracting an overlapping region in image groups imaged by the plurality of pieces of imaging means, and
   the abnormality detection means detects the abnormality on the tire surface, based on the feature in the overlapping region.

### (Supplementary Note 9)

A tire inspection system including:
a plurality of pieces of illumination means for performing illumination from different illumination directions;
imaging means for imaging a tire;
control means for controlling the plurality of pieces of illumination means and causing the imaging means to image a tire surface in time with an illumination timing, while sequentially irradiating the tire with illumination from a plurality of illumination directions;
feature extraction means for extracting a feature including at least a surface normal of the tire from an image group imaged by the imaging means;
region division means for dividing the image group into a region of a tread surface and a side surface of the tire, based on the feature; and
abnormality detection means for detecting an abnormality on the tire surface, based on a feature of the tread surface and a feature of the side surface.

### (Supplementary Note 10)

A tire inspection method for causing a computer to inspect a tire, the method including:
controlling a plurality of pieces of illumination means that performs illumination from different illumination directions and causing imaging means to image a tire surface in time with an illumination timing, while sequentially irradiating the tire with illumination from a plurality of illumination directions;
extracting a feature including at least a surface normal of the tire from an image group imaged by the imaging means;
dividing the image group into a region of a tread surface and a region of a side surface of the tire, based on the feature; and
detecting an abnormality on the tire surface, based on a feature of the tread surface and a feature of the side surface.

### (Supplementary Note 11)

A program for causing a computer to execute:
processing for controlling a plurality of pieces of illumination means that performs illumination from different illumination directions and causing imaging means to image a tire surface in time with an illumination timing, while sequentially irradiating the tire with illumination from a plurality of illumination directions;
processing for extracting a feature including at least a surface normal of the tire from an image group imaged by the imaging means;
processing for dividing the image group into a region of a tread surface and a region of a side surface of the tire, based on the feature; and
processing for detecting an abnormality on the tire surface, based on a feature of the tread surface and a feature of the side surface.

## Claims

1. A tire inspection device comprising:
control means for controlling a plurality of pieces of illumination means that performs illumination from different illumination directions and causing imaging means to image a tire surface in time with an illumination timing, while sequentially irradiating the tire with illumination from a plurality of illumination directions;
feature extraction means for extracting a feature including at least a surface normal of the tire from an image group imaged by the imaging means;
region division means for dividing the image group into a region of a tread surface and a region of a side surface of the tire, based on the feature; and
abnormality detection means for detecting an abnormality on the tire surface, based on a feature of the tread surface and a feature of the side surface.

2. The tire inspection device according to claim 1, further comprising:
normalization means for normalizing the feature of the tread surface and the feature of the side surface, in such a way that each of the tread surface and the side surface faces a predetermined direction, wherein
the abnormality detection means detects the abnormality on the tire surface, based on the normalized feature of the tread surface and the normalized feature of the side surface.

3. The tire inspection device according to claim 1 or 2, wherein the feature extraction means extracts the feature including the surface normal by applying a photometric stereo method to the image group imaged by the imaging means.

4. The tire inspection device according to claim 1 or 2, further comprising:
rotation means for rotating the tire about a central axis;
synchronization means for synchronizing an imaging timing of the imaging means with rotation of the rotation means; and
final determination means for determining an abnormality in an entire circumference of the tire, based on a detection result of the abnormality detection means.

5. The tire inspection device according to claim 4, wherein
the synchronization means
causes the rotation means to stop the rotation of the tire when the imaging means images the tire surface, and
causes the rotation means to rotate the tire when the imaging means does not image the tire surface.

6. The tire inspection device according to claim 4, wherein
the synchronization means causes the rotation means to rotate the tire regardless of imaging of the tire surface by the imaging means,
the tire inspection device further comprising:
overlapping region extraction means for extracting an overlapping region in an image group in which rotation angles of the tire imaged by the imaging means are different, and
the abnormality detection means detects the abnormality on the tire surface, based on a feature in the overlapping region.

7. The tire inspection device according to claim 1 or 2, further comprising:
model number recognition means for recognizing a model number of the tire, based on an image imaged by the imaging means; and
inspection reference setting means for setting an inspection reference by the abnormality detection means, based on the model number of the tire.

8. The tire inspection device according to claim 1 or 2, wherein
the control means causes a plurality of pieces of the imaging means to image the tire surface in time with the illumination timing, while sequentially irradiating the tire with illumination from the plurality of illumination directions,
the tire inspection device further including:
overlapping region extraction means for extracting an overlapping region in image groups imaged by the plurality of pieces of imaging means, and
the abnormality detection means detects the abnormality on the tire surface, based on the feature in the overlapping region.

9. A tire inspection method for causing a computer to inspect a tire, the method comprising:
controlling a plurality of pieces of illumination means that performs illumination from different illumination directions and causing imaging means to image a tire surface in time with an illumination timing, while sequentially irradiating the tire with illumination from a plurality of illumination directions;
extracting a feature including at least a surface normal of the tire from an image group imaged by the imaging means;
dividing the image group into a region of a tread surface and a region of a side surface of the tire, based on the feature; and
detecting an abnormality on the tire surface, based on a feature of the tread surface and a feature of the side surface.
